# EUROPÄISCHE PATENTSCHRIFT

(11) **EP 1 339 593 B1**
(45) Veröffentlichungstag und Bekanntmachung des Hinweises auf die Patenterteilung: **30.01.2008**
(21) Anmeldenummer: 01995655.6
(22) Anmeldetag: 22.11.2001
(51) Int. Cl.: B60T 17/08

(54) **FEDERSPEICHERBREMSZYLINDER MIT LÖSESPINDEL-INDIKATOR**
PRESSURE-ACCUMULATING BRAKE CYLINDER WITH RELEASE SPINDLE INDICATOR
CYLINDRE DE FREIN A ACCUMULATEUR AVEC INDICATEUR DE DECLENCHEMENT A BROCHE

(30) Priorität: 28.11.2000 DE 10058927
(43) Veröffentlichungstag der Anmeldung: 03.09.2003
(73) Patentinhaber: KNORR-BREMSE SYSTEME FÜR NUTZFAHRZEUGE GMBH, 80809 München (DE)
(72) Erfinder: GRAVIER, Damien, 81476 München (DE)
(86) Internationale Anmeldenummer: PCT/EP2001/013583
(87) Internationale Veröffentlichungsnummer: WO 2002/044004

(56) Entgegenhaltungen:
- WO-A-97/07322
- DE-A- 19 630 795
- US-A- 5 943 940

## Beschreibung

Die vorliegende Erfindung betrifft einen Federspeicherbremszylinder, der insbesondere in Nutzfahrzeugen angewendet wird.

Ein derartiger Federspeicherbremszylinder weist üblicherweise ein Gehäuse auf, in welchem ein Federspeicherkolben geführt ist, der den Innenraum des Gehäuses in eine Federspeicherkammer und einen Druckraum unterteilt. In der Federspeicherkammer ist eine Federeinrichtung angeordnet, die den Federspeicherkolben in Richtung zum Druckraum vorspannt. Damit ein abgestelltes bzw. gebremstes Fahrzeug, in welchem der Federspeicherbremszylinder angeordnet ist, bewegt werden kann, wird der Druckraum derart mit Druckluft beaufschlagt, dass der Federspeicherkolben entgegen der Vorspannungswirkung der Federeinrichtung verschoben wird. Dadurch gelangt eine mit dem Federspeicherkolben gekoppelte Bremseinrichtung außer Eingriff mit einer Bremsscheibe oder dergleichen, so dass das Fahrzeug nicht weiter gebremst ist. Für Bremsbetätigungen während der Fahrt kann ein derartiger Federspeicherbremszylinder in bekannter Weise mit einem Betriebsbremszylinder gekoppelt sein.

Kommt es nun aufgrund eines Druckabfalls im System zu einer wesentlichen Reduzierung des Luftdrucks im Druckraum, so wird der Federspeicherkolben aufgrund der Vorspannung der Federeinrichtung derart in Richtung zum Druckraum verschoben, dass die mit dem Federspeicherkolben gekoppelte Bremseinrichtung greift und eine Bremsung des Fahrzeugs ausführt. Damit soll beispielsweise bei einem Leitungsabriß der Bremsdruckleitung während der Fahrt zuverlässig verhindert werden, dass ein Nutzfahrzeug ungebremst weiterfährt und somit schwer kontrollierbar wird.

Diese Zwangsbremsung bei mangelnder Druckluftzufuhr wird zudem auch bei über längere Zeit abgestellten Anhängern etc. genutzt, damit ein unbeabsichtigtes Wegrollen dieser Fahrzeuge verhindert werden kann.

Die somit durch die mechanische Feder im Federspeicherbremszylinder in derartigen Fällen ausgeübte Bremswirkung soll jedoch beispielsweise zum Verschieben abgestellter Fahrzeuge oder zum Räumen einer aufgrund einer Panne blockierten Fahrspur wieder gelöst werden können, damit die betreffenden Fahrzeuge bewegt und z.B. Verkehrsbehinderungen aufgehoben werden können.

Da die vorhanden Druckluftversorgung hierbei jedoch häufig durch Leitungsabriß etc. beschädigt ist und nicht eingesetzt werden kann und auch keine ergänzende Druckluftversorgung vorhanden ist, ist es in der Praxis erforderlich, dass derartige Federspeicherbremszylinder eine mechanische Notlöseeinrichtung aufweisen. Diese ist üblicherweise mit einer Betätigungseinrichtung in Gestalt einer Gewindespindel versehen, die von außen zugänglich und drehbar betätigbar ist. Diese Gewindespindel wirkt dabei in einer bekannten Bauweise, wie sie in der DE 198 30 154 A1 beschrieben ist, mit einem in Axialrichtung feststehend am Gehäuse des Federspeicherbremszylinders angeordneten Abtriebelement, wie z.B. einer Mutter zusammen, so dass eine Drehung der Gewindespindel eine lineare Verschiebung derselben bewirkt. Hierbei ist bei dieser konkreten Ausführungsform beispielsweise das in axialer Richtung innere Ende der Gewindespindel mit einem Überstand ausgebildet, der mit einer Anlagefläche am Federspeicherkolben in Anlage gebracht werden kann. Aufgrund der durch die Drehbewegung eingeleiteten linearen Versetzung der Gewindespindel in Axialrichtung kommt es somit zu einer ebenfalls linearen Verschiebung des Federspeicherkolbens entgegen der Vorspannkraft der Federeinrichtung, so dass hierdurch die mit dem Federspeicherkolben zusammenwirkende Bremseinrichtung gelöst werden kann.

Diese Bauweise hat sich hinsichtlich ihrer Funktionalität in der Praxis bewährt. Allerdings weist sie den Nachteil auf, dass die Gewindespindel zum mechanischen Notlösen relativ weit aus dem Gehäuse herausgedreht werden muß, was zu einem erheblichen Platzbedarf auf dieser Seite des Federspeicherbremszylinders führt. Dieser Raum ist jedoch für andere Komponenten am Nutzfahrzeug vorgesehen oder wird durch andere bewegte Komponenten begrenzt. Um diesem Problem zu begegnen, sieht die gattungsbildende WO-A-97/07 322 vor, dass die Gewindespindel In Axialrichtung feststehend am Gehäuse des Federspeicherbremszylinders festgelegt ist. Gleichzeitig ist die Gewindespindel jedoch drehbar gelagert und am von außen zugänglichen Ende mit einer Angriffsfläche für eine Drehwerkzeug wie z.B. mit einem Sechskantkopf oder dgl. Versehen, mittels dem die Gewindespindel in Drehung versetzt werden kann. Diese Gewindespindel greift in einen zentralen Hohlraum des Federspeicherkolbens ein, wobei die Gewindespindel hier mit einer Mutter in Eingriff steht, die im Inneren des Federspeicherkolbens nicht drehbar, dabei jedoch in Axialrichtung verschiebbar gelagert ist. Zum Lösen der Federspeicherbremse wird die Gewindespindel hier derart drehend betätigt, dass die hierauf ablaufende Mutter gegen eine Anlagefläche am Federspeicherkolben geführt wird und bei weiterer Drehung der Gewindespindel eine Mitnahme des Federspeicherkolbens entgegen der Vorspannung der Federeinrichtung in der Federspeicherkammer bewirkt. Um von außen zu erkennen, in welchem Zustand sich der Federspeicherzylinder befindet, ist weiterhin eine Indikatoreinrichtung zum Anzeigen der Stellung des Federspeicherkolbens vorgesehen, welche einen mit der Mutter in Eingriff bringbaren und gegenüber der Gewindespindel verschieblichen Anschlag aufweist. Die Indikatoreinrichtung umfasst einen Indikatorstab, der die Gewindespindel durchgreift und gegenüber dieser in axialer Richtung verschiebbar ist, wobei an einem Ende des Indikatorstabes der Anschlag für die Mutter ausgebildet ist. Darüber hinaus ist der Indikatorstab gegenüber der Gewindespindel mittels einer Feder in eine ausgefahrene Lage vorgespannt. Folglich wird der Indikatorstab abhängig davon, ob sich der Federspeicherbremszylinder in gelöstem oder in zugespanntem Zustand befindet, relativ zur Gewindespindel verschoben, wobei ein endseitiger Anzeigeabschnitt bei gelöstem Federspeicherbremszylinder aus der Gewindespindel herausragt und bei zugespanntem Federspeicherbremszylinder in der Gewindespindel versenkt ist, wodurch eine rein mechanisch betätigte, visuelle Anzeige gegeben ist. Diese Art der Anzeige ist allerdings aufgrund der zahlreichen Bauteile und deren aufwändiger Bearbeitung, wie beispielsweise der Hohlbohrung der Gewindespindel, relativ teuer.

Der vorliegenden Erfindung liegt die Aufgabe zugrunde, einen derartigen Federspeicherbremszylinder derart weiterzubilden, dass er einfacher aufgebaut und kostengünstiger herstellbar ist.

Diese Aufgabe wird durch die kennzeichnenden Merkmale von Anspruch 1 gelöst.

Aufgrund der elektrischen Signalübertragung anstatt der bisherigen rein mechanischen Signalübertragung können Bauteile, wie beispielsweise der Indikatorstab und die ihn vorspannende Feder sowie Fertigungsschritte wie beispielsweise das Hohlbohren der Gewindespindel zur Aufnahme des Indikatorstabes entfallen, wodurch sich ein wesentlich einfacherer Aufbau des Federspeicherbremszylinders ergibt.

Der mit der Mutter in Eingriff bringbare Anschlag kann beispielsweise durch einen in einen elektrischen Kreis integrierten, elektrischen Endlagenschalter gebildet werden. Hierbei wird bei Erreichen der Endlagenposition der Mutter ein elektrisches Signal erzeugt, welches beispielsweise über ein Kabel an die an der Außenseite des Federspeicherbremszylinders angeordnete Anzeige übermittelbar ist. Solche Endlagenschalter sind preisgünstige, standardisierte Bauelemente, die in einem Federspeicherbremszylinder zudem einfach anzuordnen sind. Eine elektrische Signalübermittlung erlaubt darüber hinaus die Verwendung einer elektrischen Anzeige, beispielsweise einer LED-Anzeige. Dies hat gegenüber dem beim Stand der Technik als Anzeige verwendeten eingefahrenen bzw. überstehenden Abschnitt eines Indikatorstabs den Vorteil, dass auch bei Nacht, bei ungünstigen Sichtverhältnissen oder bei starker Verschmutzung durch die Leuchtkraft der elektrischen Anzeige ein zuverlässiges Ablesen möglich ist. Nachdem ohnehin sämtliche Nutzfahrzeuge über eine eigene Stromversorgung verfügen, muss zudem keine zusätzliche elektrische Energiequelle vorgesehen werden.

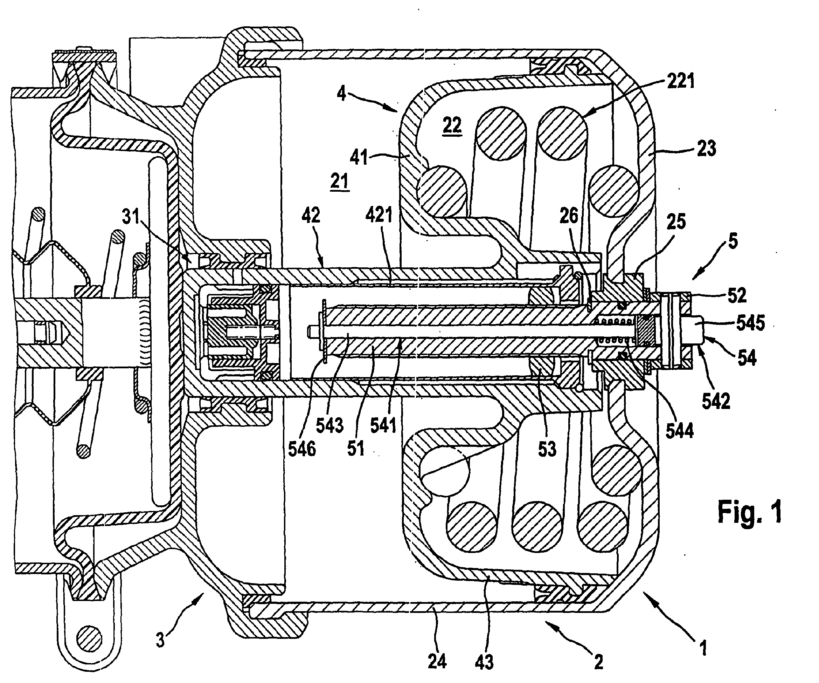

Gemäß der Darstellung in Fig. 1 weist ein Federspeicherbremszylinder 1 ein Gehäuse 2 auf, an welches ein Flansch 3 derart angekoppelt ist, daß das Gehäuse 2 und der Flansch 3 eine im wesentlichen abgeschlossene Einheit bilden. An den Flansch 3 kann beispielsweise ein hier nur andeutungsweise dargestellter Betriebsbremszylinder angekoppelt werden. Im Innenraum des Gehäuses 2 ist ein Federspeicherkolben 4 angeordnet, der diesen Innenraum in einen Druckraum 21 und eine Federspeicherkammer 22 unterteilt. In der Federspeicherkammer 22 ist eine Federeinrichtung 221 derart angeordnet, daß sie ihre Federwirkung in Axialrichtung des Federspeicherbremszylinders 1 entfaltet und den Federspeicherkolben 4 in Richtung zum Flansch 3 vorspannt. Diese Federeinrichtung 221 stützt sich hierbei einerseits auf einem Boden 23 des Gehäuses 2 und andererseits an einem Kolbenteiler 41 des Federspeicherkolbens 4 ab.

Der Federspeicherkolben 4 weist ferner eine Kolbeneinheit 42 auf, die Integral mit dem Kolbenteiler 41 ausgebildet ist und mit ihrem freien Ende eine zentrale Durchgangsöffnung 31 des Flansches 3 linear verschieblich durchgreift. Der Federspeicherkolben 4 wirkt hierdurch auf den in der Fig. 1 angedeuteten Betriebsbremszylinder ein. Überdies weist der Federspeicherkolben 4 noch einen Führungsabschnitt 43 auf, der umfangsseitig in einem Zylinderabschnitt 24 des Gehäuses 2 abgedichtet geführt ist.

Darüber hinaus weist der Federspeicherbremszylinder 1 eine Notlöseeinrichtung 5 auf, mittels der ein mechanisches Notlösen der Federspeicherbremse durch manuelle äußere Einwirkungen möglich ist. Die Notlöseeinrichtung 5 ist hierbei in dieser Ausführungsform zentrisch im Federspeicherbremszylinder 1 angeordnet und greift durch eine zentrale Öffnung des Gehäuses 2 in einen Hohlraum der Kolbeneinheit 42 ein. Sie weist hierbei eine Gewindespindel 51 auf, an deren äußeren Ende ein Sechskantkopf 52 o.ä. mittels einem Stift verdrehsicher befestigt ist. Die Gewindespindel 51 durchgreift eine Buchse bzw. ein Lagerteil 25 des Gehäuses 2 derart, daß sie darin abgedichtet geführt ist, um eine Drehbewegung ausführen zu können. Gleichzeitig ist die Gewindespindel 51 durch eine Sicherungsscheibe 26 an einer axialen Bewegung gegenüber dem Gehäuse 2 gehindert.

Die Gewindespindel 51 und der Sechskantkopf 52 wirken hierbei als eine Betätigungseinrichtung, die mit einer Übertragungseinrichtung in Gestalt einer Mutter 53 zusammenwirkt. Diese ist mit dem Gewindegang der Gewindespindel 51 derart in Eingriff, daß eine Drehbewegung der Gewindespindel 51 in eine lineare Bewegung der Mutter 53 in Axialrichtung übertragen wird. Hierzu ist die hier als Sechskantmutter ausgeführte Mutter 53 formschlüssig in einem Führungsteil 421 im Hohlraum der Kolbeneinheit 42 aufgenommen, so daß sie sich nicht verdrehen kann.

Die Notlöseeinrichtung 5 weist ferner eine Indikatoreinrichtung 54 auf. Diese enthält einen Indikatorstab 541, der einen Anzeigeabschnitt 542 und einen hiervon abgestuften Steuerabschnitt 543 mit kleinerem Durchmesser aufweist. Der Indikatorstab 541 durchgreift hierbei die Gewindespindel 51 mittig und ist darin derart abgedichtet geführt, daß eine Bewegung in Axialrichtung möglich ist. Hierbei ist der Indikatorstab 541 mittels einer Feder 544 gegenüber einem Stufenabschnitt in der Spindel 51 so vorgespannt, daß der Anzeigeabschnitt 542 nach außen gedrückt wird. Im Bereich des Anzeigeabschnitts 542 weist der Indikatorstab 541 ferner einen Schlitz 545 auf, durch den der Befestigungsstift für den Sechskantkopf 52 auf der Gewindespindel 51 derart hindurchgreift, daß eine lineare Verschiebung des Indikatorstabs 541 in einem vorbestimmten Maße möglich ist.

An dem vom Anzeigeabschnitt 542 fernen Ende des Steuerabschnitts 543 ist ferner eine quer zur Axialrichtung angeordnete und als Anschlag dienende Scheibe 546 angeordnet, die den Steuerabschnitt 543 umgreift und dabei umfangsseitig derart hiervon übersteht, daß der äußere Rand der Scheibe 546 mit der Mutter 53 in Anlage gelangen kann. Die Scheibe 546 ist hierbei durch eine Sicherungsscheibe am Steuerabschnitt 543 festgelegt.

Fig. 1 zeigt den Fall, daß die Notlöseeinrichtung 5 des Federspeicherbremszylinders 1 betätigt wurde und die Bremswirkung der Federspeicherbremse hierdurch aufgehoben ist. Hierzu liegt eine Seitenfläche der Mutter 53 an einem Anlageabschnitt des Kolbenteilers 41 an und hat diesen im Zuge der Drehbewegung der Gewindespindel 51 entgegen der Vorspannung der Federeinrichtung 221 in der Federspeicherkammer 22 in Richtung zum Boden 23 des Gehäuses 2 gezogen. Gemäß der Darstellung in Fig. 1 ist der Anzeigeabschnitt 542 des Indikatorstabes 541 hierbei durch die Feder 544 so beaufschlagt, daß ein äußeres Ende hiervon nach außen über den Sechskantkopf 52 übersteht und dadurch anzeigt, daß der Federspeicherbremszylinder 1 notgelöst ist.

Soll nun dieser Federspeicherbremszylinder 1 wieder in herkömmlicher Weise angewendet werden, so wird die Gewindespindel 51 mittels dem Sechskantkopf 52 derart gedreht, daß sich die Mutter 53 in Axialrichtung weg vom Boden 23 des Gehäuses 2 bewegt. Aufgrund der Vorspannung durch die Federeinrichtung 221 in der Federspeicherkammer 22 folgt der Kolbenteller 41 dieser Bewegung, wobei die Seitenfläche der Mutter 53 somit in Anlage zur Gegenfläche am Kolbenteller 41 bleibt. Mit dem Kolbenteller 41 bewegt sich auch die Kolbeneinheit 42 weg vom Boden 23 des Gehäuses 2, so daß eine Bremskraft auf die hier nicht dargestellte Bremseinrichtung jenseits des Flansches 3 ausgeübt wird. Sobald die maximale Bremskraft anliegt, folgt der Kolbenteller 41 der Mutter 53 jedoch nicht weiter.

Für einen normalen Betrieb des Federspeicherbremszylinders 1 würde durch einen hier nicht dargestellten Lufteinlaß Druckluft in den Druckraum 21 derart gesteuert eingeführt, daß diese Druckluft die Federkraft der Feder in der Federspeicherkammer 22 überwindet und so wahlweise, in Abhängigkeit von der Höhe des Drucks, die Bremse löst oder betätigt.

Durch ein fortgesetztes Eindrehen der Mutter 53 in die Kolbeneinheit 42 gelangt diese schließlich in Eingriff mit der Scheibe 546 der Indikatoreinrichtung 54 und erlaubt dadurch eine lineare Verschiebung des Indikatorstabs 541 entgegen der Federkraft der Feder 544. Der Anzeigeabschnitt 542 wird dadurch derart relativ zum Sechskantkopf 52 bzw. dem äußeren Ende der Gewindespindel 51 bewegt, daß er eingezogen wird, bis er im wesentlichen bündig hierzu vorliegt. Hieran kann ein Benutzer dann erkennen, daß der Federspeicherbremszylinder 1 nicht manuell notgelöst ist. Der Federspeicherbremszylinder 1 ist dann in der normalen Betriebsstellung, in der die Bremsbetätigung entweder durch die Druckluftbeaufschlagung, oder falls keine Druckluft vorhanden ist, eine Bremswirkung durch den Federspeicher ausgelöst ist. Mit anderen Worten stellt der in Fig. 1 gezeigt Zustand den Sonderfall dar, wenn der Federspeicherbremszylinder 1 manuell notgelöst wurde.

Die Erfindung läßt neben der erläuterten Ausführungsform weitere Gestaltungsansätze zu.

So kann der notgelöste Zustand des Federspeicherbremszylinders 1 zusätzlich zum überstehenden Ende des Anzeigeabschnitts 542 auch durch eine spezielle Farbgebung desselben von außen erkennbar sein. Der Anzeigeabschnitt 542 könnte hierzu an seinem äußeren Ende z. B. rot eingefärbt sein.

Ferner ist es auch möglich, die Indikatoreinrichtung 54 so auszubilden, daß das Verschieben der Scheibe 546 gegenüber der Gewindespindel 51 mittels der Mutter 53 auch auf andere Weise als durch mechanische Mitnahme des gesamten Indikatorstabs 541 zur Außenseite angezeigt werden kann. Hierzu ist beispielsweise auch eine elektrische Signalübertragung denkbar, wobei hierbei dann auf einen überstehenden Abschnitt der Indikatoreinrichtung auf der Außenseite des Federspeicherbremszylinders 1 verzichtet werden kann.

Die Indikatoreinrichtung kann anstelle des Indikatorstabes auch beispielsweise mit einer Spindel, einem Rohr etc. versehen und dementsprechend konstruktiv abgewandelt sein.

Anstelle der Scheibe 546 kann auch ein den Steuerabschnitt 543 durchgreifender Querstift o. dgl. als Anschlag für die Mutter 53 verwendet werden.

Die Übertragungseinrichtung kann wie in der erläuterten Ausführungsform eine herkömmliche Sechskantmutter sein; alternativ ist jedoch auch eine Bauweise realisierbar, in der hierfür eine Gewindebuchse z.B. mit einer Längsnut oder einer Sternverzahnung etc. als Verdrehungsschutz verwendet wird. An die Stelle des Führungsteils 421 tritt dann eine entsprechend angepaßte andere Einrichtung.

Der Federspeicherkolben 4 kann ferner auch anstelle des Führungsabschnitts 43 mit einer Membran versehen sein, welche dann als Trennorgan zwischen Druckraum 21 und Federspeicherkammer 22 dient. Hierdurch könnte auf die Führung im Zylinderabschnitt 24 des Gehäuses 2 verzichtet werden.

Der spezielle Aufbau der Notlöseeinrichtung 5 könnte auch abweichend vom gezeigten Ausführungsbeispiel ausgebildet sein, so daß eine Mitnahme des Federspeicherkolbens 4 auch auf andere Weise durch ein manuelles äußeres Eingreifen möglich ist. Die erfindungsgemäße Indikatoreinrichtung 54 läßt sich hierbei aufgrund ihrer kompakten und einfachen Bauweise an unterschiedlichen Systemen von Notlöseeinrichtungen anwenden.

Die Erfindung schafft somit einen Federspeicherbremszylinder 1 mit einem Gehäuse 2, in welchem ein Federspeicherkolben 4 angeordnet ist, der einen Innenraum des Gehäuses 2 in eine Federspeicherkammer 22 und einen Druckraum 21 unterteilt, einer Federeinrichtung 221, die in der Federspeicherkammer 22 angeordnet ist und den Federspeicherkolben 4 in Richtung zum Druckraum 21 vorspannt, und einer mechanischen Notlöseeinrichtung 5, die zum mechanischen Notlösen des Federspeicherbremszylinders 1 dient. Hierzu ist mittels der mechanischen Notlöseeinrichtung 5 eine lineare Verschiebung des Federspeicherkolbens 1 entgegen der Vorspannung durch die Federeinrichtung 221 bewirkbar, wobei eine als Betätigungseinrichtung wirkende Gewindespindel 51 in axialer Richtung feststehend am Gehäuse 2 festgelegt ist, und wobei die Notlöseeinrichtung 5 ferner eine Indikatoreinrichtung 54 aufweist, welche die Stellung des Federspeicherkolbens 4 bezüglich der Betätigungseinrichtung anzeigt. Dadurch ist es insbesondere auch bei einer Notlöseeinrichtung, deren Gewindespindel nicht nach außen herausgedreht wird, möglich, eine zuverlässige Anzeige dafür bereitzustellen, ob der Federspeicherbremszylinder 1 notgelöst ist oder nicht.

## Patentansprüche

1. Federspeicherbremszylinder (1) mit
a) einem Gehäuse (2), in welchem ein Federspeicherkolben (4) angeordnet ist, der einen Innenraum des Gehäuses (2) in eine Federspeicherkammer (22) und einen Druckraum (21) unterteilt,
b) einer Federeinrichtung (221), die in der Federspeicherkammer (22) angeordnet ist und den Federspeicherkolben (4) in Richtung zum Druckraum (21) vorspannt,
c) einer mechanischen Notlöseeinrichtung (5) zum mechanischen Notlösen des Federspeicherbremszylinders (1) durch axiale Verschiebung des Federspeicherkolbens (4) entgegen der Vorspannung der Federeinrichtung (221) beinhaltend eine Gewindespindel (51), welche drehbar und axialfest an dem Gehäuse (2) gelagert und mit einer Mutter (53) in Eingriff ist, die axial verschiebbar und drehfest in der Notlöseeinrichtung (5) gehalten und zum mechanischen Notlösen des Federspeicherbremszylinders (1) mit einer Anlagefläche am Federspeicherkolben (4) in Anlage bringbar ist,
d) einer Indikatoreinrichtung (54) zum Anzeigen der Stellung des Federspeicherkolbens (4), welche einen mit der Mutter (53) in Eingriff bringbaren Anschlag (546) aufweist, **dadurch gekennzeichnet, dass** ein Eingriff der Mutter (53) mit dem Anschlag (546) mittels elektrischer Signalübertragung an eine auf der Außenseite des Federspeicherbremszylinders (1) angeordnete Anzeige der Indikatoreinrichtung (54) übermittelbar ist.

## Claims

1. Spring-loaded brake actuator (1) comprising
(a) a housing (2) wherein a spring-loading piston (4) is disposed that subdivides an interior space of said housing (2) into a spring-loading chamber (22) and a pressure chamber (21),
(b) a spring means (221) disposed in said spring-loading chamber (22) and biasing said spring-loading piston (4) in a direction towards said pressure chamber,
(c) a mechanical emergency brake release means (5) for the mechanical emergency release of said spring-loaded brake actuator (1) by axial displacement of said spring-loading piston against the biasing force of said spring means (221), which includes a threaded spindle (51) supported for rotation in an axially fixed manner on said housing (2) and being engaged in a nut (53) retained in said emergency release means (5) so as to be axially displaceable and rotating therewith, whilst it is capable of being carried into bearing contact against a bearing face on said spring-loaded brake actuator (4) for the mechanical emergency release of said spring-loaded brake actuator (1),
(d) an indicator means (54) for indication of the position of said spring-loading piston (4), which includes a stop (546) that may be engaged in said nut (53),
**characterised in that** the engagement of said nut (53) with said stop (546) may be signalled by electrical signal transmission to an indicator of said indicator means (54), which is disposed on the outside of said spring-loaded brake actuator (54).

## Revendications

1. Cylindre (1) de frein à ressort accumulateur comprenant
a) un boîtier (2) dans lequel est disposé un piston (4) de ressort accumulateur, qui subdivise l'intérieur du boîtier (2) en un chambre (22) de ressort accumulateur et en un espace (21) sous pression,
b) un dispositif (221) à ressort, qui est disposé dans la chambre (22) du ressort accumulateur et qui met le piston (4) de ressort accumulateur sous précontrainte en direction de l'espace (21) sous pression,
c) un dispositif (5) mécanique de déclenchement de secours, pour déclencher mécaniquement en secours le cylindre (1) de frein à ressort accumulateur par coulissement axial du piston (4) de ressort accumulateur à l'encontre de la précontrainte du dispositif (221) à ressort, comprenant une broche (51) filetée qui est montée tournante et fixe axialement sur le boîtier (2) et qui engrène avec un écrou (53) qui peut coulisser axialement et qui est maintenu sans pouvoir tourner dans le dispositif (5) de déclenchement en secours et qui, pour le déclenchement mécanique en secours du cylindre (1) de frein à ressort accumulateur, peut être mis en contact avec une surface de contact sur le piston (4) du ressort accumulateur,
d) un dispositif (54) indicateur pour afficher la position du pison (4) du ressort accumulateur, qui a une butée (546) pouvant être mise en prise avec l'écrou (53), **caractérisé en ce qu'**une mise en prise de l'écrou (53) avec la butée (546) peut être transmise au moyen d'une transmission électrique de signal à un affichage du dispositif (50) indicateur disposé sur le côté extérieur du cylindre (1) de frein à ressort accumulateur.
